# EUROPEAN PATENT APPLICATION

(11) **EP 2 669 487 A2**
(43) Date of publication of application: **04.12.2013**
(21) Application number: 13168441.7
(22) Date of filing: 20.05.2013
(51) Int. Cl.: F02C 1/00

(54) **Supercharged Combined Cycle System with Air-Flow Bypass**

(30) Priority: 31.05.2012 US 201213485160
(71) Applicant: General Electric Company, Schenectady, New York 12345 (US)
(72) Inventor: Ekanayake, Sanji, Atlanta, GA Georgia 30339 (US); Scipio, Alston l., Atlanta, GA Georgia 30339 (US)
(74) Representative: Cleary, Fidelma

(57) **Abstract**

A system and method for supercharging a combined cycle system (11) includes a forced draft fan (30) providing a variable air flow. At least a first portion of the air flow is directed to a compressor (15) and a second portion of the airflow is diverted to a heat recovery steam generator (23). A control system (39) controls the airflows provided to the compressor (15) and the heat recovery steam generator (23). The system allows a combined cycle system (11) to be operated at a desired operating state by controlling the flow of air from the forced draft fan (30) to the compressor (15) and the heat recovery steam generator (23).

## Description

### TECHNICAL FIELD

The subject matter disclosed herein relates to combined cycle power systems and more particularly to supercharged combined cycle systems with air flow bypass.

### BACKGROUND

Combined cycle power systems and cogeneration facilities utilize gas turbines to generate power. These gas turbines typically generate high temperature exhaust gases that are conveyed into a heat recovery steam generator (HRSG) that produces steam. The steam may be used to drive a steam turbine to generate more power and/or to provide steam for use in other processes.

Operating power systems at maximum efficiency is a high priority for any generation facility. Factors including load conditions, equipment degradation, and ambient conditions may cause the generation unit to operate under less than optimal conditions. Supercharging (causing the inlet pressure to exceed the exhaust pressure) turbine systems as a way to increase the capacity of gas-turbine is known. Supercharged turbine systems typically include a variable speed supercharging fan located at the gas turbine inlet that is driven by steam energy derived from converting exhaust waste heat into steam. The supercharging fan is used to increase the air mass flow rate into the gas turbine so that the gas turbine shaft horsepower can be augmented.

A problem with conventional supercharged combined cycle systems is that they are uneconomical due primarily to the prevailing "spark spread." Spark spread is the gross margin of a gas-fired power plant from selling a given amount of electricity minus the cost of fuel required to produce that given amount of electricity. Operational, maintenance, capital and other financial costs must be covered from the spark spread. Another problem with conventional supercharged systems is that controlling the inlet fan is difficult. In many cases, the return on investment of such systems is not attractive. Conventional supercharged combined cycle systems do not provide customers with sufficient system flexibility, output and efficiency over the system life cycle. Additionally, those systems require significant modifications and are sometimes not compatible with legacy systems.

### BRIEF DESCRIPTION OF THE INVENTION

In accordance with one aspect, the invention resides in a combined cycle system including a gas turbine subsystem having a compressor and an output side that provides an exhaust, and a heat recovery steam generation subsystem having an inlet. An exhaust duct is coupled to the gas turbine system and the inlet for transporting the exhaust to the heat recovery steam generation system. The system also includes a controllable air stream source that produces an air flow and a ducting assembly coupled to the controllable air stream source that conveys at least a portion of the air flow to the compressor. A bypass coupled to the controllable air stream source and the exhaust duct adapted to selectively convey at least a portion of the air flow to the inlet is also provided.

In another aspect, the invention resides in a supercharging system, the system including a forced draft fan providing a variable air flow. A duct that directs at least a portion of the air flow to a compressor and a bypass subsystem that diverts at least a portion of the air flow to a heat recovery steam generator are also provided. The system includes a control system coupled to the bypass subsystem and the forced draft fan.

In another aspect, the invention resides in a method of operating a combined cycle system includes determining a first operating state and determining a desired operating state. The method includes determining a first mass flow quantity of air to be provided to a compressor and a second mass flow quantity of air to be provided to a heat recovery steam generator to achieve the desired operating state. The method includes providing source of controllable air flow, selectively conveying the first mass flow quantity of air into the compressor; and selectively conveying the second mass flow quantity of air to the heat recovery steam generator.

Other features and advantages of the present invention will be apparent from the following more detailed description of the preferred embodiment, taken in conjunction with the accompanying drawings which illustrate, by way of example, the principles of certain aspects of the invention.

### BRIEF DESCRIPTION OF THE DRAWINGS

Figure 1 is a schematic illustration of an embodiment of a supercharged combined cycle system with air bypass.
Figure 2 is a schematic illustration of another embodiment of a supercharged combined cycle system with air bypass.
Figure 3 is a flow chart of an embodiment of a method implemented by a supercharged combined cycle system with air bypass.
Figure 4 is a chart illustrating a result accomplished by a supercharged combined cycle system with air bypass.
Figure 5 is a flow chart of an embodiment of a method implemented by a supercharged combined cycle system with air bypass.
Figure 6 is a chart illustrating a result accomplished by a supercharged combined cycle system with air bypass.
Figure 7 is a chart illustrating a result accomplished by a supercharged combined cycle system with air bypass.

### DETAILED DESCRIPTION OF THE INVENTION

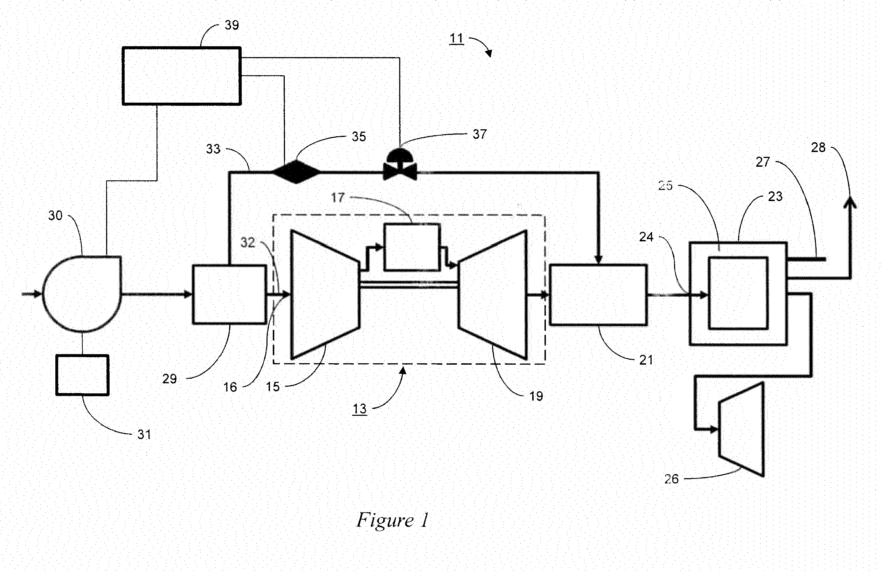

Illustrated in Figure 1 is a schematic illustration of a supercharged combined cycle system with air bypass (SCCAB system 11) in accordance with one embodiment of the present invention. The SCCAB system 11 includes a gas turbine subsystem 13 that in turn includes a compressor 15, having a compressor inlet 16, a combustor 17 and a turbine 19. An exhaust duct 21 may be coupled to the turbine 19 and a heat recovery steam generator subsystem (HRSG 23). The HRSG 23 recovers heat from exhaust gases from the turbine 19 that are conveyed through HRSG inlet 24 to generate steam. The HRSG 23 may also include a secondary burner 25 to provide additional energy to the HRSG 23. Some of the steam and exhaust from the HRSG 23 may be vented to stack 27 or used to drive a steam turbine 27 and provide additional power. Some of the steam from the HRSG 23 may be transported through process steam outlet header 28 to be used for other processes. The SCCAB system 11 may also include an inlet house and cooling system 29. The inlet house and cooling system 29 is used to cool and filter the air entering the compressor inlet 16 to increase power and avoid damage to the compressor 15.

The SCCAB system 11 also includes a forced draft fan 30 used to create a positive pressure forcing air into the compressor 15. Forced draft fan 30 may have a fixed or variable blade fan (not shown) and an electric motor (not shown) to drive the blades. Forced draft fan 30 may be driven by a variable frequency drive (VFD 31) that controls the rotational speed of the electric motor by controlling the frequency of the electrical power supplied to the motor. VFD 31 provides a number of advantages, including energy savings from operating at lower than nominal speeds. Another advantage is that VFD 31 may be gradually ramped up to speed lessening the stress on the equipment. The forced draft fan 30 provides a controllable air stream source though a duct assembly 32 and may be used to increase the mass flow rate of air into the compressor 15. The quantity of air going into the compressor is controlled by the VFD 31. The compressor inlet 16 may be configured to accommodate slight positive pressure as compared to the slight negative pressure conventional design.

The SCCAB system 11 may also include a bypass 33 (which may include external ducting) that diverts a portion of the air flow from forced draft fan 30 into the exhaust duct 21. This increased air flow provides additional oxygen to the secondary burner 25 to avoid flame out or less than optimal combustion. Bypass 33 may be provided with a flow sensor 35 and a damper valve 37 to control the airflow through the bypass 33. A control system 39 may be provided to receive data from flow sensor 35 and to control the damper valve 37 and the VFD 31. Control system 39 may be integrated into the larger control system used for operation control of SCCAB system 11. The airflow from the bypass is conveyed to the exhaust duct 21 where the temperature of the combined air and exhaust entering the HRSG 23 may be modulated.

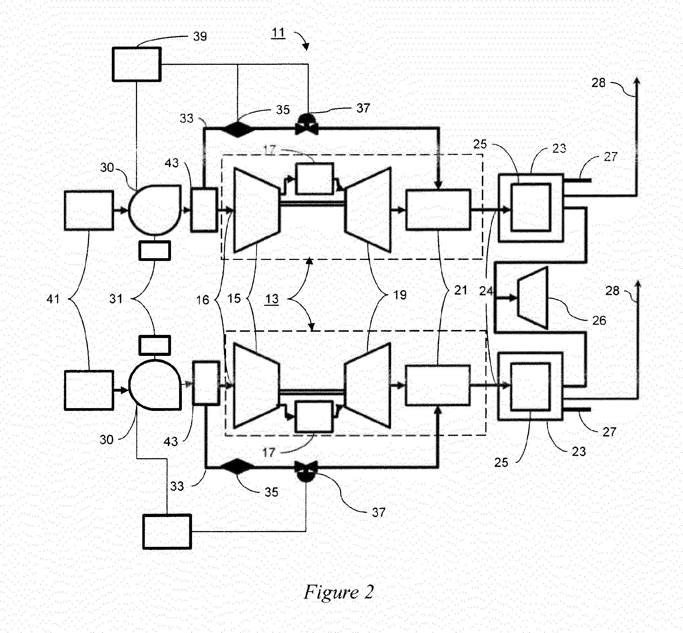

Illustrated in Figure 2 is another embodiment of a SCCAB system 11 that includes a pair of gas turbine subsystems 13. In this embodiment, the exhaust of the pair of gas turbine subsystems 13 is used to drive a single steam turbine 27. In this embodiment, an inlet house 41 is positioned upstream of the forced draft fan 30, and a cooling system 43, where the airflow from the fan may be cooled, is positioned downstream of the forced draft fan 30. The bypass 33 is coupled to the cooling system 43. One of ordinary skill in the art will recognize that although in this embodiment two gas turbine systems 13 are described, any number of gas turbine systems 13 in combination with any number of steam turbine(s) 27 may be used.

In operation, the SCCAB system 11 provides increased air flow into the HRSG 23 resulting in a number of benefits. The SCCAB system 11 may provide an operator with the ability to optimize combined cycle plant flexibility, efficiency and lifecycle economics. For example, boosting the inlet pressure of the gas turbine subsystem 13 improves output and heat rate performance. The output performance of the SCCAB system 11 may be maintained flat (zero degradation) throughout the life cycle of SCCAB system 11 by increasing the level of supercharging (and parasitic load to drive the forced draft fan 30) over time commensurate with the degradation of SCCAB system 11. The use of the VFD 31 to power the forced draft fan 30 enables and substantially improves system efficiencies under partial-supercharge conditions. Another benefit that may be derived from the SCCAB system 11 is the expansion of the power generation to steam production ratio envelope. This may be accomplished by modulating the exhaust gas temperature at HRSG inlet 24 with air from the forced draft fan 30. Another benefit that may be derived from the SCCAB system 11 is an improved start up rate as a result of the reduction in the purge cycle (removal of built up gas). The SCCAB system 11 may also provide an improved load ramp rate resulting from the modulation of the exhaust temperature at the exhaust duct 21 with air from the forced draft fan 30 provided through the bypass 33. The forced draft fan 30 of the SCCAB system 11 also provides an effective means to force-cool the gas turbine subsystem 13 and HRSG 23, reducing maintenance outage time and improves system availability. The forced draft fan 30 provides comparable benefit for simple cycle and combined-cycle configurations for all heavy-duty gas turbine systems 13 delivering in the range of 20% output improvement under hot ambient conditions with modest capital cost.

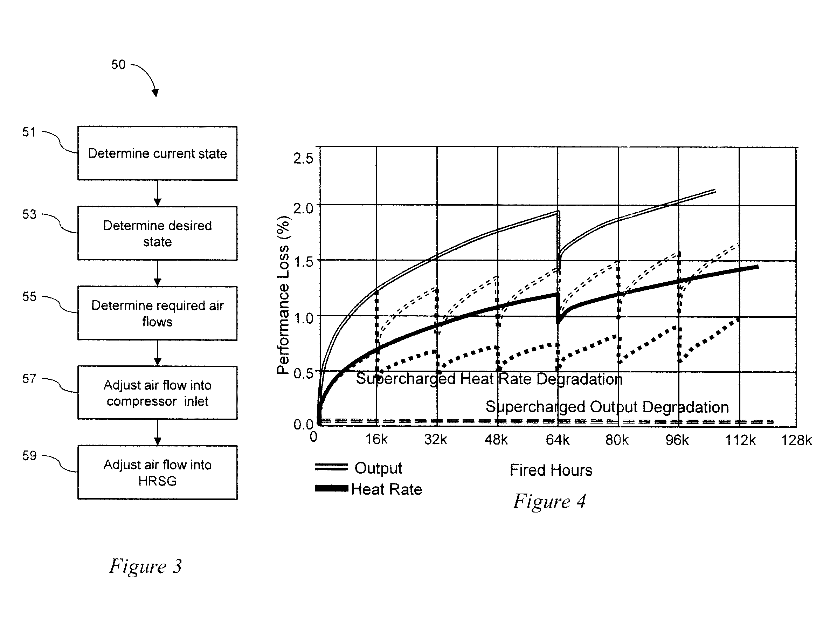

The SCCAB system 11 may implement a method of maintaining the output of a combined cycle plant over time (method 50) as illustrated with reference to Figures 3 - 4. In Figure 3 the method 50 may determine the current state (method element 51), and may determine a desired state (method element 53). The desired state may be to maintain a nominal output over time to compensate for performance losses. Performance losses typically arise as a result of wear of components in the gas turbine over time. These losses may be measured or calculated. The method 50 may determine the required increased air mass flow to maintain the desired output (method element 55). Based on that determination, the method 50 may adjust the air mass flow into the compressor inlet 16 (method element 57). The method 50 may adjust the combined air and exhaust mass flow into the HRSG inlet 24 (method element 59).

Figure 4 illustrates the loss of output and heat rate over time (expressed in percentages) of a conventional combined cycle system and a SCCAB system 11. Gas turbines suffer a loss in output over time, as a result of wear of components in the gas turbine. This loss is due in part to increased turbine and compressor clearances and changes in surface finish and airfoil contour. Typically maintenance or compressor cleaning cannot recover this loss, rather the solution is the replacement of affected parts at recommended inspection intervals. However, by increasing the level of supercharging using forced draft fan 30 output performance may be maintained, although at a cost due to the parasitic load to drive the forced draft fan 30. The top curve (unbroken double line) illustrates the typical output loss of a conventional combined cycle system. The second curve (broken double lines) illustrates the expected output loss with periodic inspections and routine maintenance. The lower curve (broken triple line) shows that the output loss of an SCCAB system 11 may be maintained at near 0%. Similarly, the heat rate degradation of a conventional combined cycle system (single solid curve) may be significantly improved with an SCCAB system 11.

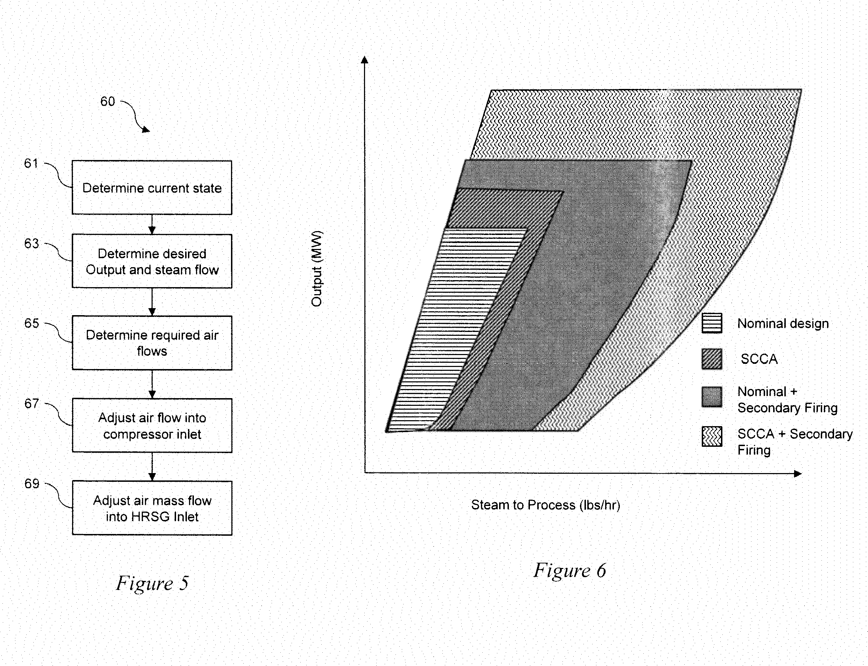

Figure 5 illustrates a method of controlling the steam output of a SCCAB system 11 (method 60). Method 60 may initially determine the current state (method element 61). The method 60 may also determine the desired output and steam flow (method element 63). The method 60 may determine the required increased air flow (method element 65) to the compressor inlet 16 and the HRSG inlet 24. Method 60 may then adjust the air flow into the compressor inlet 16 (method element 67) and the combined exhaust and air flow into the HRSG inlet 24 (method element 69), to provide the desired steam output.

Figure 6 illustrates expanded operating envelope to maintain constant steam flow. The vertical axis measures output in MW and horizontal axes measures steam mass flow. The interior area (light vertical cross hatch) shows the envelope of a conventional combined cycle system. The envelope of an SCCA 11 is shown in diagonal cross hatching, and a larger area illustrates the performance of an SCCA 11 combined with secondary firing in the HRSG 23.

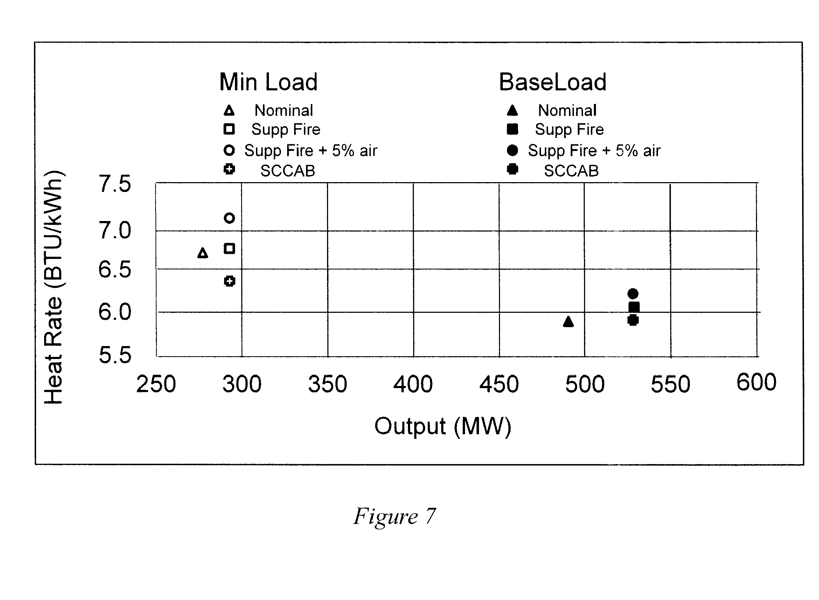

Figure 7 is a chart that illustrates the improved operational performance of an SCCAB system 11 at a specific ambient temperature in comparison with conventional combined cycle systems at minimum and base loads. The horizontal axis measures output in MW and the vertical axis measures heat rate (the thermal energy (BTU's) from fuel required to produce one kWh of electricity). The chart illustrates the improved efficiency delivered by the SCCAB system 11.

The foregoing detailed description has set forth various embodiments of the systems and/or methods via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware. It will further be understood that method steps may be presented in a particular order in flowcharts, and/or examples herein, but are not necessarily limited to being performed in the presented order. For example, steps may be performed simultaneously, or in a different order than presented herein, and such variations will be apparent to one of skill in the art in light of this disclosure.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A combined cycle system (11) comprising:
a gas turbine subsystem (13) having a compressor (15) and an output side that provides an exhaust;
a heat recovery steam generation subsystem (23) having an inlet (24);
an exhaust duct (21) coupled to the gas turbine subsystem (13) and the inlet (16) for transporting the exhaust to the heat recovery steam generation subsystem (23);
a controllable air stream source (30, 31) that produces an air flow;
a ducting (32) assembly coupled to the controllable air stream source (30, 31) that conveys at least a portion of the air flow to the compressor (15); and
a bypass (33) coupled to the controllable air stream source (30) and the exhaust duct (21) adapted to selectively convey at least a portion of the air flow to the inlet (24).

2. The combined cycle system (11) of claim 1, wherein the controllable air stream source (30, 31) comprises a forced draft fan (30).

3. The combined cycle system (11) of claim 2, further comprising a variable frequency drive (31) coupled to the forced draft fan (30).

4. The combined cycle system (11) of any of claims 1 to 3, further comprising a flow sensor (35) and a damper valve (37) disposed on the bypass (33).

5. The combined cycle system (11) of claim 3 or 4, further comprising a control system (39) that controls the variable frequency drive (31).

6. The combined cycle system (11) of claim 4 or 5, further comprising a control system (39) that receives signals from the flow sensor (35) and controls the damper valve (37).

7. The combined cycle system (11) of any preceding claim, wherein the heat recovery steam generation subsystem (22) comprises a supplemental burner (25).

8. A method of controlling a combined cycle system (11) comprising:
determining a first operating state;
determining a desired operating state;
determining a first mass flow quantity of air to be provided to a compressor (15) and a second mass flow quantity of air to be provided to a heat recovery steam generator (23) to achieve the desired operating state;
providing source of controllable air flow (30, 31);
selectively conveying the first mass flow quantity of air into the compressor (15); and
selectively conveying the second mass flow quantity of air to the heat recovery steam generator (23).

9. The method of claim 8, wherein the method element of providing source of controllable air flow (30, 31) comprises providing a forced draft fan (30) driven by a variable frequency drive (31).

10. The method of claim 8, or 9, wherein the desired operating state is a state that compensates for output degradation.

11. The method of any of claims 8 to 10, wherein the method element of selectively conveying a second mass flow quantity of air to the heat recovery steam generator (23) further comprises conveying a second mass flow quantity of air at a temperature and modulating the temperature.

12. The method of any of claims 8 to 11, further comprising force cooling the first mass flow quantity of air.

13. The method of any of claims 8 to 12, wherein the desired operating state is a state that provides a predetermined steam flow.

14. The method of any of claims 8 to 13, wherein the method element of selectively conveying the second mass flow quantity of air comprises conveying the second mass flow quantity of air through a bypass (33) to the heat recovery steam generator (23).

15. The method of any of claims 8 to 14, further comprising controlling the second mass flow quantity of air with a valve (37) coupled to the bypass (33).
